# FASCICULE DE BREVET EUROPEEN

(11) **EP 3 516 721 B1**
(45) Date de publication et mention de la délivrance du brevet: **30.09.2020**
(21) Numéro de dépôt: 17778230.7
(22) Date de dépôt: 20.09.2017
(51) Int. Cl.: H01M 8/0273, C25B 1/00, C25B 1/10, C25B 9/04, C25B 9/10, C25B 9/18, C25B 15/08, H01M 8/0286, H01M 8/124, F16J 15/02

(54) **RÉACTEUR D'ÉLECTROLYSE DE L'EAU (SOEC) OU PILE À COMBUSTIBLE (SOFC) À TAUX D'UTILISATION DE VAPEUR D'EAU OU RESPECTIVEMENT DE COMBUSTIBLE AUGMENTÉ**
WASSERELEKTROLYSEREAKTOR (SOEC) ODER BRENNSTOFFZELLE (SOFC) MIT ERHÖHTER WASSERDAMPF- ODER BRENNSTOFFEINSATZRATE
WATER ELECTROLYSIS REACTOR (SOEC) OR FUEL CELL (SOFC) WITH AN INCREASED RATE OF WATER VAPOUR USE OR FUEL USE, RESPECTIVELY

(30) Priorité: 22.09.2016 FR 1658906
(43) Date de publication de la demande: 31.07.2019
(73) Titulaire: Commissariat à l'Énergie Atomique et aux Énergies Alternatives, 75015 Paris (FR)
(72) Inventeur: DI IORIO, Stéphane, 38250 Lans en Vercors (FR); ROUX, Guilhem, 38120 Saint-Egreve (FR); ORESIC, Bruno, 38210 Tullins (FR); REYTIER, Magali, 38250 Villard de Lans (FR)
(74) Mandataire: Nony
(86) Numéro de dépôt international: PCT/EP2017/073839
(87) Numéro de publication internationale: WO 2018/055011

(56) Documents cités:
- EP-A1- 1 296 394
- EP-A2- 1 729 361
- FR-A1- 3 014 246
- US-A1- 2005 191 539

## Description

### Domaine technique

La présente invention concerne le domaine des piles à combustibles à oxydes solides (SOFC, acronyme anglais pour « *Solid Oxide Fuel Cell* ») et celui de l'électrolyse de l'eau à haute température (EHT, ou EVHT pour électrolyse de la vapeur d'eau à haute température, ou HTE acronyme anglais pour « *High Temperature Electralysis* », ou encore HTSE acronyme anglais pour « *High Temperature Steam Electrolysis* ») ou de la co-électrolyse de la vapeur d'eau et dioxyde de carbone CO₂, également à oxydes solides (SOEC, acronyme anglais pour « *Solid Oxide Electralysis Cell* »).

L'invention a trait plus particulièrement à une nouvelle conception de la distribution des gaz au sein d'un réacteur d'électrolyse ou de co-électrolyse de l'eau à haute température (EHT) de type SOEC, ou d'une pile à combustible de type SOFC, à empilement de cellules électrochimiques élémentaires, qui permet d'atteindre de forts taux d'utilisation respectivement de la vapeur d'eau H₂O ou du combustible.

Bien que décrite en référence principalement à l'application d'électrolyse de l'eau à haute température, l'invention s'applique toute aussi bien à une pile à combustible SOFC alimentée en hydrogène H₂ et/ou en méthane CH₄ en tant que combustible, et en oxygène O₂ ou en air en tant que comburant.

### Art antérieur

L'électrolyse de l'eau est une réaction électrolytique qui décompose l'eau en dioxygène et dihydrogène gazeux avec l'aide d'un courant électrique selon la réaction: H₂O→H₂ + 1/2O₂.

Pour réaliser l'électrolyse de l'eau, il est avantageux de la réaliser à haute température typiquement entre 600 et 1000°C, car une partie de l'énergie nécessaire à la réaction peut être apportée par la chaleur qui est moins chère que l'électricité et l'activation de la réaction est plus efficace à haute température et ne nécessite pas de catalyseur. Pour mettre en œuvre l'électrolyse à haute température, il est connu d'utiliser un électrolyseur de type SOEC (acronyme anglais de « *Solid Oxyde Electrolyte Cell* »), constitué d'un empilement de motifs élémentaires comportant chacun une cellule d'électrolyse à oxydes solides, constituée de trois couches anode/électrolyte/cathode superposées l'une sur l'autre, et de plaques d'interconnexion en alliages métalliques aussi appelées plaques bipolaires, ou interconnecteurs. Les interconnecteurs ont pour fonction d'assurer à la fois le passage du courant électrique et la circulation des gaz au voisinage de chaque cellule (vapeur d'eau injectée, hydrogène et oxygène extrait dans un électrolyseur EHT ; air et hydrogène injectés et eau extraite dans une pile SOFC) et de séparer les compartiments anodiques et cathodiques qui sont les compartiments de circulation des gaz du côté respectivement des anodes et des cathodes des cellules. Pour réaliser l'électrolyse de la vapeur d'eau à haute température EHT, on injecte de la vapeur d'eau H₂O dans le compartiment cathodique. Sous l'effet du courant appliqué à la cellule, la dissociation des molécules d'eau sous forme vapeur est réalisée à l'interface entre l'électrode à hydrogène (cathode) et l'électrolyte : cette dissociation produit du gaz dihydrogène H2 et des ions oxygène. Le dihydrogène est collecté et évacué en sortie de compartiment à hydrogène. Les ions oxygène O²⁻ migrent à travers l'électrolyte et se recombinent en dioxygène à l'interface entre l'électrolyte et l'électrode à oxygène (anode).

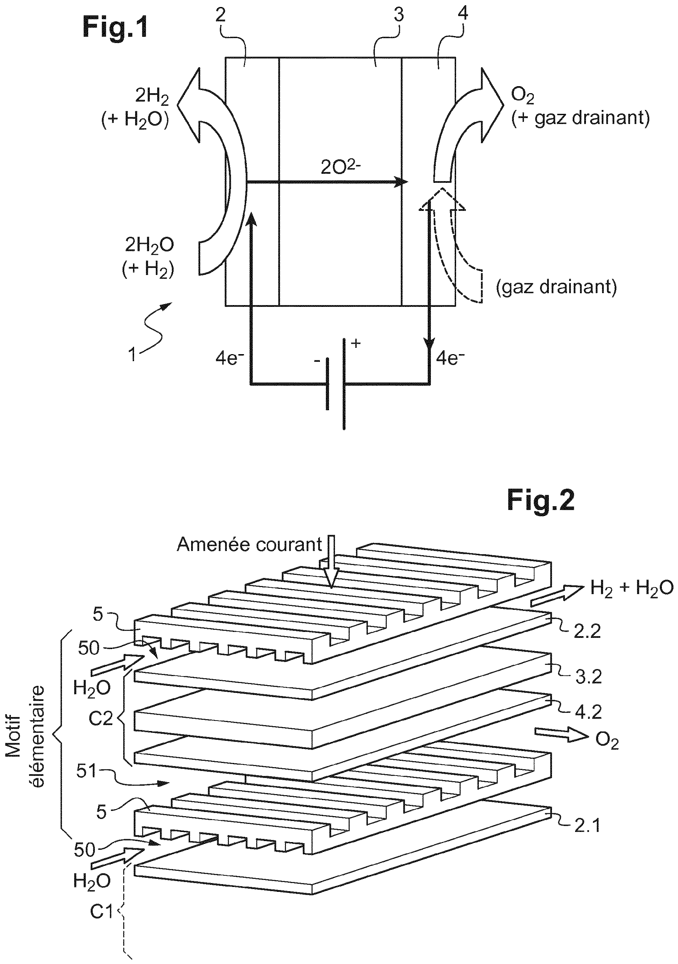

Comme schématisée en figure 1, chaque cellule d'électrolyse élémentaire 1 est formée d'une cathode 2 et d'une anode 4, placées de part et d'autre d'un électrolyte solide 3 généralement sous forme de membrane. Les deux électrodes (cathode et anode) 2,4 sont des conducteurs électroniques, en matériau poreux, et l'électrolyte 3 est étanche au gaz, isolant électronique et conducteur ionique. L'électrolyte peut être en particulier un conducteur anionique, plus précisément un conducteur anionique des ions O²⁻ et l'électrolyseur est alors dénommé électrolyseur anionique.

Les réactions électrochimiques se font à l'interface entre chacun des conducteurs électroniques et le conducteur ionique.

A la cathode 2, la demi-réaction est la suivante :

2H₂O + 4e⁻ → 2H₂ + 2O²⁻.

A l'anode 4, la demi-réaction est la suivante:

2O²⁻ → O₂+ 4e⁻.

L'électrolyte 3 intercalé entre les deux électrodes 2, 4 est le lieu de migration des ions O²⁻, sous l'effet du champ électrique créé par la différence de potentiel imposée entre l'anode 4 et la cathode 2.

Comme illustré entre parenthèses en figure 1, la vapeur d'eau en entrée de cathode peut être accompagnée d'hydrogène H₂ et l'hydrogène produit et récupéré en sortie peut être accompagné de vapeur d'eau. De même, comme illustré en pointillés, un gaz drainant, tel que l'air peut en outre être injecté en entrée pour évacuer l'oxygène produit. L'injection d'un gaz drainant a pour fonction supplémentaire de jouer le rôle de régulateur thermique.

Un réacteur d'électrolyse élémentaire est constitué d'une cellule élémentaire telle que décrite ci-dessus, avec une cathode 2, un électrolyte 3, et une anode 4 et de deux connecteurs mono-polaires qui assurent les fonctions de distribution électrique, hydraulique et thermique.

Pour augmenter les débits d'hydrogène et d'oxygène produits, il est connu d'empiler plusieurs cellules d'électrolyse élémentaires les unes sur les autres en les séparant par des dispositifs d'interconnexion, usuellement appelés interconnecteurs ou plaques d'interconnexion bipolaires. L'ensemble est positionné entre deux plaques d'interconnexion d'extrémité qui supportent les alimentations électriques et des alimentations en gaz de l'électrolyseur (réacteur d'électrolyse).

Un électrolyseur de l'eau à haute température (EHT) comprend ainsi au moins une, généralement une pluralité de cellules d'électrolyse empilées les uns sur les autres, chaque cellule élémentaire étant formée d'un électrolyte, d'une cathode et d'une anode, l'électrolyte étant intercalé entre l'anode et la cathode.

Les dispositifs d'interconnexion fluidique et électrique qui sont en contact électrique avec une ou des électrodes assurent en général les fonctions d'amenée et de collecte de courant électrique et délimitent un ou des compartiments de circulation des gaz.

Ainsi, un compartiment dit cathodique a pour fonction la distribution du courant électrique et de la vapeur d'eau ainsi que la récupération de l'hydrogène à la cathode en contact.

Un compartiment dit anodique a pour fonction la distribution du courant électrique ainsi que la récupération de l'oxygène produit à l'anode en contact, éventuellement à l'aide d'un gaz drainant.

La figure 2 représente une vue éclatée de motifs élémentaires d'un électrolyseur de vapeur d'eau à haute température selon l'état de l'art. Cet électrolyseur EHT comporte une pluralité de cellules d'électrolyse élémentaires C1, C2... de type à oxydes solides (SOEC) empilées alternativement avec des interconnecteurs 5. Chaque cellule C1, C2... est constituée d'une cathode 2.1, 2.2,... et d'une anode 4.1, 4.2, entre lesquelles est disposé un électrolyte 3.1, 3.2.... L'ensemble des cellules d'électrolyse est alimenté en série par le courant électrique et en parallèle par les gaz.

L'interconnecteur 5 est un composant en alliage métallique qui assure la séparation entre les compartiments cathodique 50 et anodique 51, définis par les volumes compris entre l'interconnecteur 5 et la cathode adjacente 2.1 et entre l'interconnecteur 5 et l'anode adjacente 4.2 respectivement. Il assure également la distribution des gaz aux cellules. L'injection de vapeur d'eau dans chaque motif élémentaire se fait dans le compartiment cathodique 50. Le collectage de l'hydrogène produit et de la vapeur d'eau résiduelle à la cathode 2.1, 2.2 ... est effectué dans le compartiment cathodique 50 en aval de la cellule C1, C2... après dissociation de la vapeur d'eau par celle-ci. Le collectage de l'oxygène produit à l'anode 4.2 est effectué dans le compartiment anodique 51 en aval de la cellule C1, C2... après dissociation de la vapeur d'eau par celle-ci.

L'interconnecteur 5 assure le passage du courant entre les cellules C1 et C2 par contact, de préférence direct, avec les électrodes adjacentes, c'est-à-dire entre l'anode 4.2 et la cathode 2.1.

Dans une pile à combustible à oxydes solides SOFC selon l'état de l'art, les cellules C1, C2... et interconnecteurs 5 utilisés sont les mêmes composants, mais le fonctionnement est inverse de celui d'un électrolyseur EHT tel qui vient d'être expliqué avec un sens du courant inversé, avec de l'air ou de l'oxygène O₂ qui alimente les compartiments devenus cathodiques et de l'hydrogène et/ou du méthane CH₄ en tant que combustible qui alimente les compartiments devenus anodiques.

Un fonctionnement satisfaisant d'un électrolyseur EHT nécessite entre autres les fonctions essentielles suivantes :
A/ une bonne isolation électrique entre deux interconnecteurs adjacents dans l'empilement, sous peine de court-circuiter la cellule d'électrolyse élémentaire intercalée entre les deux interconnecteurs,
B/ une bonne étanchéité entre les deux compartiments distincts, i.e. anodique et cathodique, sous peine de recombinaison des gaz produits entraînant une baisse de rendement et surtout l'apparition de points chauds endommageant l'électrolyseur,
C/ une bonne distribution des gaz à la fois en entrée et en récupération des gaz produits, sous peine de perte de rendement, d'inhomogénéité de pression et de température au sein des différentes cellules élémentaires voire de dégradations rédhibitoires des cellules.

Les hautes températures compliquent considérablement la réalisation des trois fonctions essentielles A/ à C/ précitées. En outre, la fragilité des cellules à oxydes solides impose certaines règles de conception contraignantes de manière à garantir leur intégrité mécanique.

Différentes conceptions existent déjà pour réaliser simultanément les trois fonctions essentielles A/ à C/.

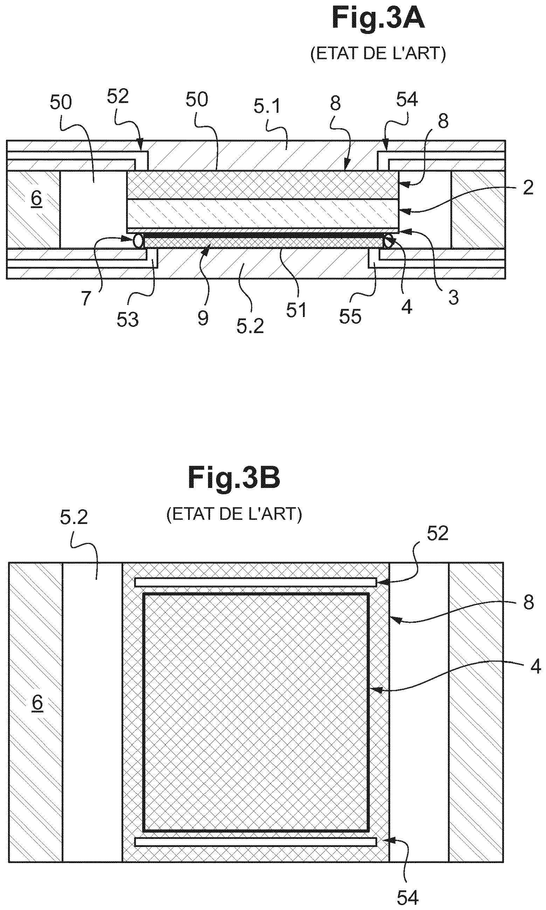

En effet, usuellement, ces fonctions au sein d'un électrolyseur EHT sont réalisées selon la configuration schématisée en figures 3A et 3B relatives à un motif élémentaire de l'empilement constituant l'électrolyseur. Une cellule d'électrolyse à cathode support C est intercalée entre deux interconnecteurs 5.1, 5.2 consécutifs dans l'empilement. Ces interconnecteurs 5.1, 5.2 sont usuellement réalisés par usinage mécanique de plaques métalliques épaisses ou par emploi de tôles minces, typiquement de 0,1 à 2 mm, embouties puis assemblées entre elles par soudage laser.

L'interconnecteur du dessus 5.1 est percé d'un conduit d'amenée de la vapeur d'eau 52, débouchant à la périphérie d'un côté de la cathode 2 et, d'un conduit de récupération de l'hydrogène produit 54, débouchant à la périphérie de la cellule du côté de la cathode 2 opposé à celui sur lequel débouche le conduit d'amenée, de sorte à réaliser une distribution de la vapeur d'eau amenée et de l'hydrogène produit, dans le compartiment cathodique 50.

L'interconnecteur du dessous 5.2 est quant à lui percé d'un conduit d'amenée de gaz drainant 53, tel que l'air, sur la cellule d'un côté de l'anode 4, et d'un conduit de récupération de l'oxygène produit 55, débouchant à la périphérie de la cellule du côté de l'anode 4 opposé à celui sur lequel débouche le conduit d'amenée de sorte à réaliser une distribution du gaz drainant et de l'oxygène produit dans le compartiment anodique 51.

Un premier joint d'étanchéité 6 est agencé à la périphérie de la cellule élémentaire et en appui à la fois contre l'interconnecteur du dessus 51 et contre l'interconnecteur du dessous. Ce joint 6 a pour fonction d'assurer l'étanchéité du compartiment cathodique vis-à-vis de l'extérieur.

Un deuxième joint d'étanchéité 7 est agencé à la périphérie de l'anode 4 de la cellule élémentaire et en appui à la fois contre l'interconnecteur du dessous 5.2 et contre l'électrolyte 3 de la cellule. Ce deuxième joint d'étanchéité 7 permet d'assurer l'étanchéité entre compartiments cathodique 50 et anodique 51, l'oxygène produit O₂ et éventuellement le gaz drainant circulant au sein de ce dernier.

Compte tenu des gammes de température de fonctionnement des électrolyseurs EHT et piles à combustibles SOFC élevées, typiquement 600°C à 1000°C, les joints d'étanchéités sont classiquement réalisés à base de verre ou de vitrocéramique. Un joint verre est à l'état pâteux à la température de fonctionnement. Lors de la conception, il est nécessaire de veiller à ne pas chasser le verre sous l'effet d'un écart de pression appliquée sur le joint. Un joint en vitrocéramique subit quant à lui un cycle thermique in situ visant à le faire cristalliser et donc à limiter son écoulement en le dotant d'éléments rigides internes à la température de fonctionnement. Tout comme pour le joint en verre, il faut veiller à ne pas chasser la vitrocéramique avant qu'elle ne soit rigidifiée. Dans la configuration schématisée en figure 3, cette contrainte est prise en compte par la densité des surfaces de part et d'autre d'un joint : le joint repose sur un support intrinsèquement étanche donc non poreux. De plus une tension de surface élevée entre le joint et son support permet d'éviter l'écoulement du verre jusqu'à un certain différentiel de pression de part et d'autre d'un joint. Pour favoriser l'obtention d'une bonne tenue mécanique du joint, il est nécessaire autant que possible de réduire la hauteur de joint et d'augmenter la surface des zones en contact avec le verre. La réduction de hauteur des joints en verre ou en vitrocéramique est obtenue par serrage de l'empilement du réacteur et par un contrôle précis de la chaine de côte initiale associé à la prise en compte des écrasements respectifs de chaque composant.

Un premier élément 8 de contact électrique est en contact mécanique d'une part avec l'interconnecteur 5.1 et d'autre part avec la cathode 2.

Un deuxième élément 9 de contact électrique est en contact mécanique d'une part avec l'anode 4 et d'autre part avec l'interconnecteur du dessous 5.2.

Usuellement, l'élément de contact 8 est une grille métallique en nickel qui a pour avantages d'être une solution efficace pour assurer la continuité électrique entre interconnecteur et cathode, la circulation des gaz et est peu coûteuse. L'élément 9 ne peut pas être une grille de nickel puisque l'atmosphère de cette chambre est oxydante et que le nickel serait transformé très rapidement en oxyde de nickel qui n'est pas conducteur. Une solution possible est d'usiner l'interconnecteur 5.2 pour créer des canaux de distribution du gaz entre conduit d'amenée 52 et conduit de récupération 54.

Dans la configuration illustrée en figures 3A et 3B, la grille de contact 8, l'électrolyte 3 dense et la cathode 2 sont sensiblement de même surface qui est supérieure à celle de l'anode 4 et de l'élément de contact 9. Cette surface réduite de l'anode 4, notamment dans le cas d'une cellule dite à cathode support, est d'ailleurs mise à profit pour le positionnement du deuxième joint d'étanchéité 7 entre l'interconnecteur du dessous 5.2 et l'électrolyte 3, car ces composants présentent intrinsèquement des plans denses avantageux pour la réalisation d'une bonne étanchéité. De ce fait également, la surface électrochimique utile de la cellule est limitée à celle de l'anode 4.

Cette configuration avec grille de contact 8 et premier joint d'étanchéité 6 entre compartiment cathodique 50 et extérieur de l'empilement, présente plusieurs inconvénients.

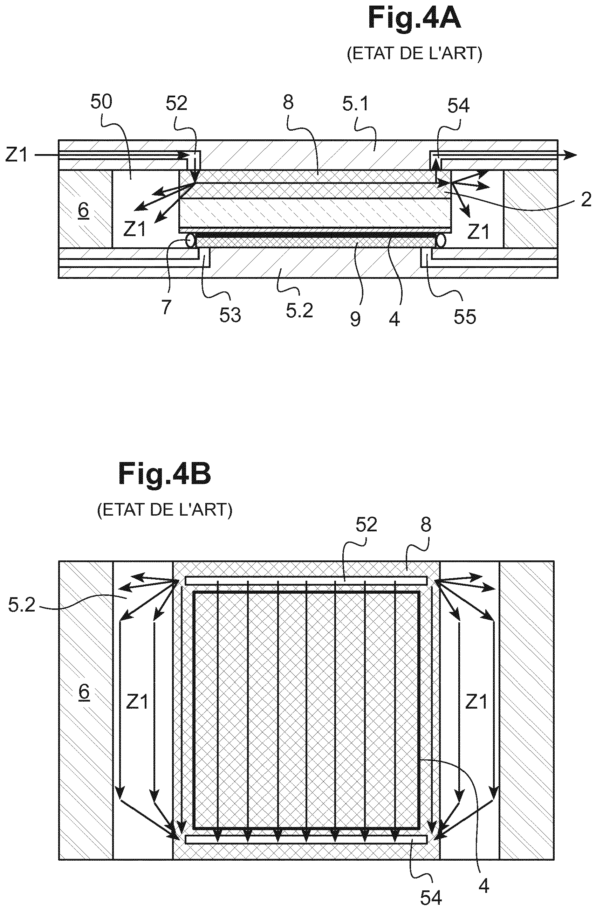

Tout d'abord, les inventeurs ont pu constater qu'une partie de la vapeur d'eau qui est destinée à alimenter la cathode n'est de fait pas utilisée, c'est-à-dire n'est pas convertie en hydrogène. En effet, comme illustré en figures 4A et 4B, une partie de la vapeur d'eau alimentée dans le conduit 52 n'est pas distribuée sur la cathode 2 mais circule dans les zones Z1non utiles et/ou non actives électrochimiquement qui sont situées à la périphérie de la cellule, c'est-à-dire dans l'espace libre délimité entre la périphérie de la cellule et le joint d'étanchéité 6. Autrement dit, le taux d'utilisation maximum de la vapeur d'eau amenée dans le conduit 52 ne pourra jamais être de 100%.

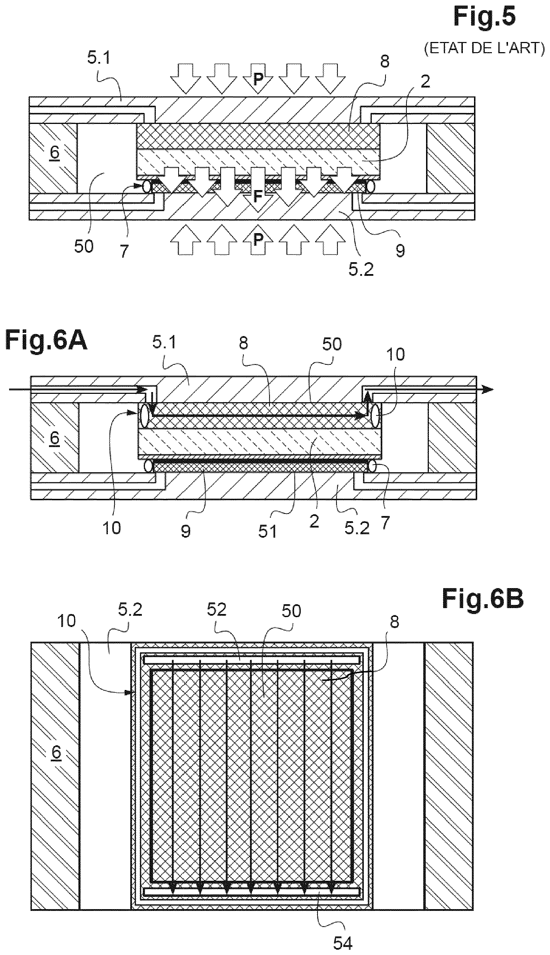

Ensuite, l'agencement du deuxième joint d'étanchéité 7 supporté par l'électrolyte 3 dense en périphérie de l'anode 4 met en porte-à-faux la cellule C. Cela crée des contraintes de flexion qui génèrent une mise en traction de certaines parties de la cellule lors du serrage de l'empilement de l'électrolyseur. En effet, le deuxième joint 7 devient de plus en plus rigide dans le temps, et les contraintes appliquées à l'empilement se traduisent par des contraintes de traction due à cette flexion qui sont dommageables pour chaque cellule. Les efforts du serrage de l'empilement sont représentés en figure 5 sous la forme de flèches P tandis que les déplacements en flexion nocifs de la cellule sont montrés sous la forme de flèches F de taille différente.

Les inconvénients explicités ci-avant se répercutent pour tous les motifs élémentaires de l'empilement.

La demande de brevet US 2005/191539A1 divulgue l'insertion d'une barrière d'étanchéité dans les éléments de contact et de diffusion des gaz d'une pile à membrane échangeuse de protons (PEMFC) à empilement.

La demande de brevet EP 1729361A1 décrit une architecture de pile à combustible à polyélectrolyte dans laquelle des couches isolantes en résine sont insérées entre le film polyélectrolyte et des couches de diffusion à la périphérie des anode et cathode.

La demande de brevet FR3014246A1 divulgue la réalisation d'un joint d'étanchéité à la périphérie des cellules entre deux interconnecteurs adjacents d'un pile SOFC ou d'un électrolyseur SOEC.

La demande de brevet EP1296394 A1 divulgue le préambule des revendications indépendantes 1 et 5.

Il existe donc un besoin de trouver une nouvelle configuration d'un électrolyseur (EHT) de type SOEC ou d'une pile à combustible de type SOFC à empilement, qui permet de réaliser les fonctions A/ à C/ précitées, notamment en s'affranchissant des inconvénients de la configuration schématisée en figures 3A et 3B, et donc en augmentant le taux maximal de conversion du gaz injecté (vapeur d'eau en mode électrolyse, combustible en mode pile) et en minimisant les contraintes mécaniques générées par flexion, nuisibles aux cellules et ce tout en garantissant une continuité électrique satisfaisante dans l'empilement.

Un but de l'invention est de répondre au moins en partie à ce besoin.

Un autre but de l'invention est de proposer une nouvelle configuration d'un électrolyseur (EHT) de type SOEC ou d'une pile à combustible de type SOFC qui réponde au moins en partie à ce besoin et qui permette de modifier un minimum de pièces pour réaliser l'empilement par rapport à ceux de l'art antérieur.

### Exposé de l'invention

Pour ce faire, l'invention concerne, sous l'un de ses aspects, et selon une première alternative un dispositif, destiné à former un motif élémentaire d'un réacteur d'électrolyse ou de co-électrolyse de type SOEC, comprenant:
- une cellule d'électrolyse élémentaire à oxydes solides formée d'une cathode, d'une anode, et d'un électrolyte intercalé entre la cathode et l'anode;
- un premier et un deuxième interconnecteurs électrique et fluidique, constitués chacun d'un composant en matériau conducteur électronique et étanche aux gaz; les premier et deuxième interconnecteurs étant agencés de part et d'autre de la cellule élémentaire; le premier interconnecteur étant percé d'un conduit d'amenée de la vapeur d'eau, débouchant à la périphérie d'un côté de la cathode et, d'un conduit de récupération de l'hydrogène produit, débouchant à la périphérie de la cellule du côté de la cathode opposé à celui sur lequel débouche le conduit d'amenée, de sorte à réaliser une distribution de la vapeur d'eau amenée et de l'hydrogène produit, dans un compartiment; le deuxième interconnecteur étant percé d'un conduit de récupération de l'oxygène produit, débouchant à la périphérie de la cellule du côté de l'anode de sorte à réaliser une distribution de l'oxygène produit jusqu'au conduit de récupération dans un compartiment;
- un premier élément de contact électrique, distinct des interconnecteurs, qui est en contact mécanique d'une part avec le premier interconnecteur et d'autre part avec la cathode; le premier élément de contact électrique étant un substrat poreux.

Selon l'invention, le dispositif comprend :
- un premier joint d'étanchéité, agencé à la périphérie de la cellule élémentaire et en appui à la fois contre le premier interconnecteur et contre le deuxième interconnecteur;
- un deuxième joint d'étanchéité, agencé à la périphérie de l'anode de la cellule élémentaire et en appui à la fois contre le deuxième interconnecteur et contre l'électrolyte.
- un troisième joint d'étanchéité, inséré dans le substrat poreux du premier élément de contact, le joint étant en appui contre le premier interconnecteur et la cathode en étant agencé à la périphérie des conduits respectivement d'amenée de vapeur d'eau et de récupération de l'hydrogène produit, délimitant ainsi le compartiment de distribution de la vapeur d'eau amenée et de l'hydrogène produit.

Selon une caractéristique de l'invention, le deuxième interconnecteur peut être percé d'un conduit d'amenée de gaz drainant, tel que l'air, sur la cellule du côté de l'anode, opposé à celui sur lequel débouche le conduit de récupération de l'O2 de sorte à réaliser une distribution respectivement du gaz drainant amené et de l'oxygène produit, depuis le conduit d'amenée jusqu'au conduit de récupération.

Selon une variante avantageuse, le dispositif comprend un deuxième élément de contact électrique, qui est en contact mécanique d'une part avec l'anode et d'autre part avec le deuxième interconnecteur.

L'invention a également pour objet selon une deuxième alternative un dispositif, destiné à former un motif élémentaire d'une pile à combustible de type SOFC, comprenant:
- une cellule électrochimique élémentaire à oxydes solides formée d'une anode, d'une cathode, et d'un électrolyte intercalé entre la cathode et l'anode,
- un premier et un deuxième interconnecteurs électrique et fluidique, constitués chacun d'un composant en matériau conducteur électronique et étanche aux gaz; les premier et deuxième interconnecteurs étant agencés de part et d'autre de la cellule élémentaire; le premier interconnecteur étant percé d'un conduit d'amenée de combustible, débouchant à la périphérie d'un côté de l'anode et, d'un conduit de récupération de l'eau produite, débouchant à la périphérie de la cellule du côté de l'anode opposé à celui sur lequel débouche le conduit d'amenée, de sorte à réaliser une distribution respectivement du combustible amené et de l'eau produite, dans un compartiment; le deuxième interconnecteur étant percé d'un conduit d'amenée d'air ou d'oxygène, débouchant à la périphérie de la cellule d'un côté de la cathode et d'un conduit de récupération du surplus d'air ou d'oxygène, débouchant à la périphérie de la cellule du côté de la cathode opposé à celui sur lequel débouche le conduit d'amenée de sorte à réaliser une distribution de l'air ou de l'oxygène jusqu'au conduit de récupération dans un compartiment;
- un premier de contact électrique, distinct des interconnecteurs, qui est en contact mécanique d'une part avec le premier interconnecteur et d'autre part avec l'anode; le premier élément de contact électrique étant un substrat poreux.

Selon l'invention, le dispositif comprend :
- un premier joint d'étanchéité, agencé à la périphérie de la cellule élémentaire et en appui à la fois contre le premier interconnecteur et contre le deuxième interconnecteur;
- un deuxième joint d'étanchéité, agencé à la périphérie de la cathode de la cellule élémentaire et en appui à la fois contre le deuxième interconnecteur et contre l'électrolyte ;
- un troisième joint d'étanchéité, inséré dans le substrat poreux du premier élément de contact, le joint étant en appui contre le premier interconnecteur et l'anode en étant agencé à la périphérie des conduits respectivement d'amenée de combustible et de récupération de l'eau produite, délimitant ainsi le compartiment de distribution du combustible amené et de l'eau produite.

Par « agencé à la périphérie des conduits », on entend ici et dans le cadre de l'invention, agencé à la périphérie de l'électrode au-delà des conduits d'amenée et récupération des gaz, l'électrode étant la cathode pour un réacteur d'(de co-)électrolyse et l'anode pour une pile SOFC.

Selon une variante de réalisation avantageuse, le dispositif comprend un deuxième élément de contact électrique, qui est en contact mécanique d'une part avec la cathode et d'autre part avec le deuxième interconnecteur.

Ainsi, l'invention consiste essentiellement à agencer un nouveau joint d'étanchéité, au sein même d'un substrat poreux qui forme l'élément de contact de chaque électrode à circulation d'hydrogène H₂ (cathode pour un réacteur SOEC, anode pour une pile à combustible), et en périphérie de cette électrode au-delà des conduits d'amenée du gaz injecté et de récupération des gaz, afin de forcer la circulation desdits gaz dans la seule zone utile de la cellule qui correspond à la surface électrochimiquement active de l'électrode H₂. Ainsi la totalité des gaz injectés (H₂O, H₂, CO₂, CO, CH₄, ...), alimentant soit un réacteur d'électrolyse ou de co-électrolyse, soit une pile SOFC peuvent être convertis.

Par-là, on augmente le taux de conversion maximum des gaz injectés qui peut atteindre 100%.

Selon une caractéristique de l'invention, les premier et deuxième joints d'étanchéité peuvent être chacun un cordon à base de verre et/ou de vitrocéramique.

Selon un mode de réalisation avantageux de l'invention, le joint d'étanchéité agencé à la périphérie des conduits est en outre agencé sensiblement à l'aplomb du deuxième joint d'étanchéité, le premier élément de contact étant considéré au-dessus de l'électrolyte, c'est-à-dire au-dessus de la cathode d'un (co-)électrolyseur et au-dessus d'une anode d'une pile SOFC. Cet agencement limite les flexions des cellules dans l'empilement et donc les contraintes mécaniques de traction nuisibles. En effet, le substrat poreux de l'élément de contact a la même surface géométrique que l'électrode H₂, ce qui permet de soutenir la cellule et de répartir les efforts sur toute sa surface. Et du fait que le troisième joint est situé au droit du deuxième joint d'étanchéité, la cellule ne se retrouve plus en porte-à-faux, et donc aucune flexion n'est induite sur les cellules.

Ainsi, le joint d'étanchéité selon l'invention agencé de manière judicieuse permet de pallier les inconvénients des configurations de réacteur SOEC ou pile à combustible SOFC selon l'état de l'art, en augmentant l'efficacité de la distribution des gaz et en minimisant les contraintes mécaniques nuisibles aux cellules de l'empilement en limitant les flexions, et ce tout en garantissant un bon contact électrique entre interconnecteur et cellule.

Selon une variante avantageuse, le joint d'étanchéité à la périphérie des conduits est un cordon à base de verre et/ou de vitrocéramique inséré dans le substrat poreux du premier élément de contact. Réaliser le joint selon l'invention à partir d'un cordon de vitrocéramique est particulièrement avantageux. Une vitrocéramique se présente à température ambiante sous forme d'une pâte qu'il est aisé de faire pénétrer dans un substrat poreux métallique, tel qu'une grille de nickel. Une montée en température du joint à des températures entre 850 et 1000°C va permettre de faire fondre la vitrocéramique qui va se mettre en place à chaud et épouser la forme du substrat en remplissant les porosités, telles que les mailles de la grille de nickel, et ce selon le profil continu qu'on souhaite lui donner pour obtenir un joint étanche. Les vitesses de montée et descente en température du joint sont de préférence inférieures à 5 °C/min.

Une fois mis en place, le joint est cristallisé aux températures de fonctionnement du réacteur ou la pile à combustible, typiquement entre 600 et 850°C, et empêche donc tout passage des gaz injectés à partir des conduits d'amenée (H₂O, H₂, CO₂, CO, CH₄, ...) vers les zones non actives de l'électrode H₂ en périphérie des cellules et au-delà des conduits d'amenée et récupération des gaz.

Un exemple avantageux de composition et de mise en œuvre du joint est celui décrit dans le brevet FR3014246 B1.

Selon une variante distincte, le joint d'étanchéité à la périphérie des conduits peut être constitué d'un cordon de brasure insérée dans le substrat poreux du premier élément de contact. La brasure peut être insérée dans le substrat poreux avant la mise en place dans l'empilement de réacteur SOEC ou pile SOFC.

Avantageusement, la hauteur du joint d'étanchéité à la périphérie des conduits est sensiblement la même que celle du substrat poreux du premier élément de contact, tout en garantissant que ce joint est bien en contact avec le premier interconnecteur et la cathode de l'électrolyseur ou anode de pile SOFC.

Avantageusement encore, le substrat poreux du premier élément de contact est une grille métallique, telle qu'une grille de nickel. Une grille de nickel est une solution de contact peu chère et efficace en tant qu'élément de contact électrique et de distribution des gaz. Noyer un joint en verre, en vitrocéramique ou une brasure au sein d'une grille de nickel ne nuit pas à l'efficacité de cette dernière et lui permet de rester bien en contact avec l'interconnecteur et la cellule pendant toute la durée de fonctionnement du réacteur SOEC ou pile SOFC. En particulier, la vitrocéramique conserve une capacité à se déformer fortement sur plusieurs heures pour ne pas gêner les éventuelles déformations de la grille de nickel qui se produisent à la mise en place de l'électrolyseur. Pour des temps plus longs de l'ordre du jour et de la semaine, la vitrocéramique bien que rigidifiée par sa structure interne, conserve une certaine capacité d'écoulement qui permet d'accommoder la déformation de la grille de nickel.

Selon une caractéristique avantageuse, le substrat poreux du premier élément de contact électrique a une surface sensiblement identique à celle de l'électrode avec laquelle il est en contact.

De préférence encore, chaque interconnecteur est constitué d'une plaque ou d'un assemblage de tôles planes, et a une épaisseur comprise entre 0,1 et 10 mm.

De préférence, les plaques ou les tôles constituant les interconnecteurs sont en acier ferritique à environ 20% de chrome, de préférence en CROFER® 22APU ou le F18TNb, ou l'AISI 441, ou à base Nickel de type Inconel® 600 ou Haynes®

De préférence, les cellules élémentaires d'électrolyse sont de type à cathode support. Par «cellule à cathode support », on entend ici et dans le cadre de l'invention la définition déjà donnée dans le domaine de l'électrolyse de l'eau à haute température EHT et désignée sous l'acronyme anglais CSC pour « *Cathode-supported Cell* », c'est-à-dire une cellule dans laquelle l'électrolyte et l'électrode à oxygène (anode) sont disposées sur l'électrode à hydrogène (cathode) plus épaisse qui sert donc de support.

L'invention a également pour objet un réacteur d'électrolyse ou de co-électrolyse EHT, de type SOEC comportant un empilement d'une pluralité de dispositifs décrits ci-avant.

L'invention a enfin pour objet une pile à combustible de type SOFC comportant un empilement d'une pluralité de dispositifs décrits ci-avant.

L'invention concerne enfin un système comprenant un réacteur d'(de co) électrolyse précédemment cité, pouvant fonctionner de manière réversible en tant que pile à combustible comme décrite ci-dessus et vice-et-versa.

### Description détaillée

D'autres avantages et caractéristiques de l'invention ressortiront mieux à la lecture de la description détaillée d'exemples de mise en œuvre de l'invention faite à titre illustratif et non limitatif en référence aux figures suivantes parmi lesquelles :
- la figure 1 est une vue schématique montrant le principe de fonctionnement d'un électrolyseur d'eau à haute température;
- la figure 2 est une vue schématique en éclaté d'une partie d'un électrolyseur de vapeur d'eau à haute température (EHT) de type SOEC comprenant des interconnecteurs selon l'état de l'art,
- les figures 3A et 3B sont des vues schématiques respectivement en coupe longitudinale et dessus d'un motif élémentaire d'un électrolyseur EHT ou d'une pile à combustible de type SOFC selon l'état de l'art montrant la configuration des étanchéités, des contacts électriques et de la distribution des gaz au sein de l'empilement,
- les figures 4A et 4B reprennent les figures 3A et 3B et montrent la circulation de la vapeur d'eau et de l'hydrogène produit, selon l'état de l'art,
- la figure 5 est une vue identique à la figure 3A et montre les efforts de flexion auxquels est soumise la cellule,
- les figures 6A et 6B sont des vues schématiques respectivement en coupe longitudinale et dessus d'un motif élémentaire d'un électrolyseur EHT ou d'une pile à combustible de type SOFC selon l'invention montrant la configuration des étanchéités, des contacts électriques et de la distribution des gaz au sein de l'empilement, ces figures montrant en outre la circulation de la vapeur d'eau et de l'hydrogène produit, selon l'état de l'art,
- la figure 7 est une vue identique à la figure 6A et montre l'absence de flexion pour la cellule lorsque le joint d'étanchéité conforme à l'invention est d'une hauteur adéquate et a une position adéquate,
- la figure 8 est une vue identique à la figure 6A et montre les déplacements F de la cellule lorsque le joint d'étanchéité conforme à l'invention n'est pas positionné comme dans la figure 7,
- la figure 9 est une vue identique à la figure 6A et montre les efforts auxquels est soumise la cellule lorsque le joint d'étanchéité conforme à l'invention n'a pas la hauteur comme dans la figure 7,
- la figure 10 est une reproduction photographique en vue de dessus d'un motif élémentaire d'un électrolyseur selon l'invention montrant le positionnement du joint d'étanchéité conforme à l'invention,
- la figure 11 montre des courbes représentatives de la polarisation (évolution de la tension en fonction du courant appliqué) d'un empilement de cellules d'électrolyse à cathode support (CSC) connue de surface égale à 100cm², à une température de 800°C, sous vapeur d'eau H2O en entrée, respectivement avec une configuration selon l'état de l'art et une configuration selon l'invention ;
- la figure 12 montre des courbes représentatives de l'évolution de la tension, au cours de la polarisation, en fonction du taux d'utilisation de la vapeur d'eau d'un empilement de cellules d'électrolyse à cathode support (CSC) connue de surface égale à 100cm², à une température de 800°C, sous vapeur d'eau H2O en entrée, respectivement avec une configuration selon l'état de l'art et une configuration selon l'invention ;
- la figure 13 montre une courbe représentative de l'évolution de la tension, au cours de la polarisation, en fonction du taux d'utilisation de la vapeur d'eau d'une seule cellule d'électrolyse à cathode support (CSC) connue de surface égale à 100cm², à une température de 800°C, sous vapeur d'eau H2O en entrée, avec une configuration selon l'invention.

On précise ici que sur les figures 1 et 2, les symboles et les flèches d'alimentation d'une part de vapeur d'eau H₂O, de distribution et de récupération de dihydrogène H₂ et d'oxygène O₂, et du courant et d'autre part de distribution et de récupération d'oxygène O₂, et du courant sont montrés à des fins de clarté et de précision, pour illustrer le fonctionnement d'un réacteur d'électrolyse de vapeur d'eau selon l'état de l'art et d'un réacteur d'électrolyse selon l'invention.

On précise également que dans l'ensemble de la demande les termes « dessus », dessous », « à l'aplomb », « vertical », « inférieur », « supérieur », « bas », «haut », « dessous» et « dessus » sont à comprendre par référence par rapport à un réacteur d'électrolyse SOEC ou une pile SOFC en configuration verticale en fonctionnement, c'est-à-dire avec les plans d'interconnecteurs et cellules électrochimiques à l'horizontal, l'électrode O2 en dessous de l'électrode H2.

On précise également que tous les électrolyseurs décrits sont de type à oxydes solides (SOEC, acronyme anglais de « *Solid Oxyde Electrolyte Cell* ») fonctionnant à haute température. Ainsi, tous les constituants (anode/électrolyte/cathode) d'une cellule d'électrolyse sont des céramiques. La haute température de fonctionnement d'un électrolyseur (réacteur d'électrolyse) est typiquement comprise entre 600°C et 1000°C.

Typiquement, les caractéristiques d'une cellule d'électrolyse élémentaire SOEC convenant à l'invention, du type cathode support (CSC), peuvent être celles indiquées comme suit dans le tableau 1 ci-dessous.

**TABLEAU 1**

| **Cellule d'électrolyse** | **Unité** | **Valeur** |
|---|---|---|
| **Cathode 2** | | |
| Matériau constitutif | | Ni-YSZ |
| Epaisseur | µm | 315 |
| Conductivité thermique | W m⁻¹ K⁻¹ | 13,1 |
| Conductivité électrique | Ω⁻¹ m⁻¹ | 10⁵ |
| Porosité | | 0,37 |
| Perméabilité | m² | 10⁻¹³ |
| Tortuosité | | 4 |
| Densité de courant | A.m⁻² | 5300 |

| **Anode 4** | | |
|---|---|---|
| Matériau constitutif | | LSM |
| Epaisseur | µm | 20 |
| Conductivité thermique | W m⁻¹ K⁻¹ | 9,6 |
| Conductivité électrique | Ω⁻¹ m⁻¹ | 1 10⁴ |
| Porosité | | 0,37 |
| Perméabilité | m² | 10⁻¹³ |
| Tortuosité | | 4 |
| Densité de courant | A.m⁻² | 2000 |

| **Electrolyte 3** | | |
|---|---|---|
| Matériau constitutif | | YSZ |
| Epaisseur | µm | |
| Résistivité | Ω m | 0,42 |

L'ensemble des figures 1 à 5 a déjà été commenté en préambule. Elles ne sont donc pas détaillées ci-après.

Les figures 6A et 6B montrent un motif élémentaire d'un électrolyseur EHT selon l'invention.

Ce motif reprend tout d'abord l'ensemble des composants avec leurs agencements relatifs du motif selon les figures 4A et 4B selon l'état de l'art.

L'élément de contact 8 est ici une grille de nickel de même surface que la cathode 2.

Selon l'invention, on prévoit un troisième joint d'étanchéité 10 en sus du premier joint 6 et deuxième joint 7. Ce troisième joint 10 est inséré dans la grille de nickel 8, est en appui contre l'interconnecteur du dessus 5.1 et la cathode 2 en étant agencé à la périphérie des conduits respectivement d'amenée de vapeur d'eau 52 et de récupération de l'hydrogène produit 54.

L'agencement du troisième joint 10 selon l'invention délimitant ainsi le compartiment 50 de distribution de la vapeur d'eau amenée et de l'hydrogène produit qui est restreint par rapport à celui de l'art antérieur. En effet, comme montré par les flèches sur les figures en figures 4A et 4B, la vapeur d'eau est distribuée uniformément et uniquement sur toute la surface de la cathode 2. Ainsi, contrairement à l'état de l'art, la vapeur d'eau n'est pas distribuée dans des zones non actives dans l'espace libre entre premier joint 6 et périphérie de la cellule, telles que les zones Z1 des figures 4A et 4B.

Pour réaliser le joint d'étanchéité 10 selon l'invention, on a déposé à température ambiante, un cordon continu d'une vitrocéramique à l'état pâteux à la surface de la grille de nickel 8. Ensuite par un passage au-delà de sa température de transition vitreuse, entre 850 et 1000°C, la pâte fond et remplit les mailles de la grille de nickel 8 en épousant sa forme. A la température de fonctionnement de l'électrolyseur, typiquement entre 600 et 850°C, le troisième joint en vitrocéramique 10 est cristallisé.

Le joint est déposé à l'aide d'une seringue et d'un robot de dépose. La pression de seringue et la taille de l'aiguille sont réglables ce qui permet d'obtenir une quantité déposée sur un temps donné. La vitesse d'avance du bras du robot est elle aussi réglable. Ces paramètres permettent de doser la quantité de verre/vitrocéramique déposée.

Les vitesses de montée et descente en température du joint sont de préférence inférieures à 5 °C/min.

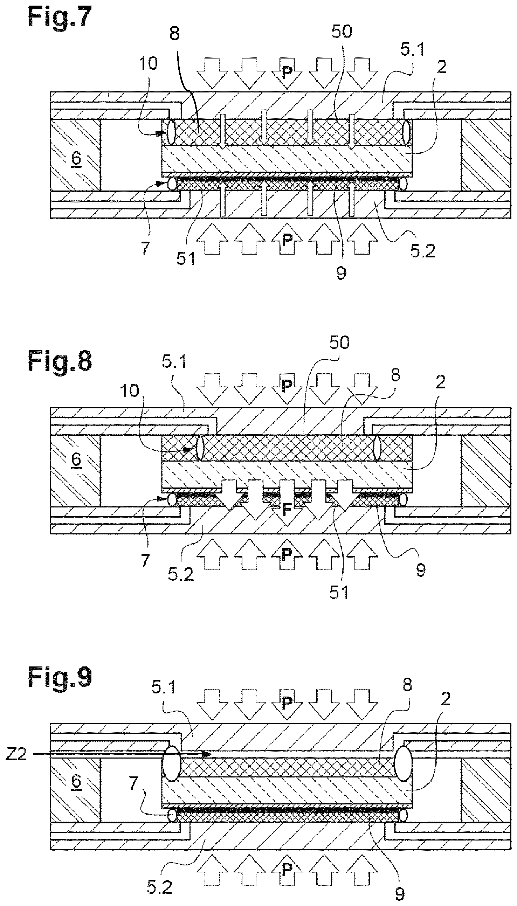

La figure 7 illustre le positionnement judicieux du joint 10 dont la hauteur est en outre bien calibrée. Comme visible, le troisième joint 10 est agencé au droit, c'est-à-dire à l'aplomb du joint d'étanchéité 7 sous l'électrolyte 3 en périphérie de l'anode 4, et sa hauteur est sensiblement la même que celle de la grille de nickel 8. Avec ces paramètres, on peut voir que sous des efforts de serrage représentés sous la forme de flèches P, les efforts sont uniformément répartis de part et d'autre de la cellule qui ne subit donc pas de contraintes mécaniques de traction qui lui sont nuisibles. Ainsi, seules des contraintes de compression sont appliquées uniformément de part et d'autre de la cellule, ces contraintes étant aisément supportées par la cellule.

La figure 8 illustre une configuration selon laquelle le troisième joint d'étanchéité 10 selon l'invention, n'est pas positionné de manière optimale. Dans cette configuration, lors du serrage, des déplacements en flexion symbolisées par les flèches F sont appliquées sur la cellule. Ces déplacements de flexion génèrent des tractions nuisibles au sein de cette dernière.

La figure 9 illustre une configuration selon laquelle le joint d'étanchéité 10 selon l'invention, n'a pas été déposée avec une quantité de vitrocéramique adaptée, ce qui se traduit au final par une hauteur de joint 10 trop importante. On peut voir que dans cette configuration, les efforts de serrage P ne sont pas transmis en totalité, voire pas du tout transmises à la grille de nickel 8. De ce fait, le contact mécanique entre l'interconnecteur du dessus 5.1, la grille de nickel 8 et la cathode 2 n'est pas optimal, voire inexistant en raison d'une zone dégagée Z2. Un autre risque est le débordement de la vitrocéramique dans les canaux d'arrivée et de sortie des gaz.

A contrario en cas de quantité de vitrocéramique déposée trop faible, la grille de nickel 8 peut ne pas être complètement étanche, ce qui aurait pour conséquence de réintroduire au moins une partie de la vapeur d'eau dans les zones Z1 comme selon l'état de l'art.

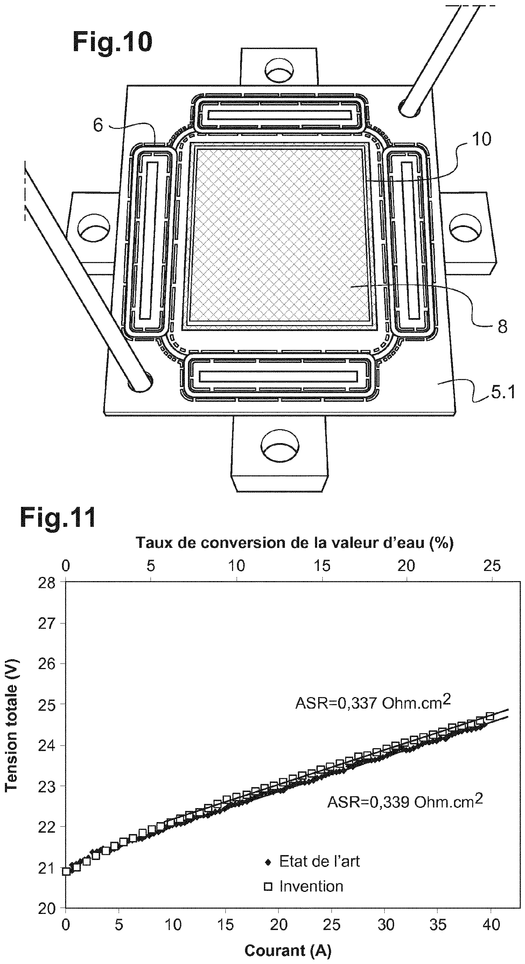

La figure 10 montre une réalisation concrète d'un troisième joint 10 en verre au sein et à la périphérie d'une grille de nickel 8 destinée à constituer un élément de contact entre interconnecteur et cathode. La composition et la mise en œuvre de ce joint 10 en verre sont comme décrit dans le brevet FR3014246 B1.

Les inventeurs ont validé expérimentalement l'efficacité d'un joint d'étanchéité selon l'invention.

Ils ont ainsi procédé à des essais comparatifs entre un électrolyseur à haute température selon l'état de l'art et un électrolyseur selon l'invention avec exactement les mêmes composants agencés identiquement, l'électrolyseur selon l'invention étant en outre muni d'un joint d'étanchéité 10 en verre inséré dans une grille de nickel 8.

Chacun des électrolyseurs testés comprend un empilement d'un nombre égal à 25 motifs élémentaires avec pour chaque cellule une surface active de 100 cm².

Les débits de vapeur d'eau envoyés en entrée d'électrolyseurs sont de 10,8 Nml/min et par cm² de surface active de l'empilement. A cette vapeur d'eau, se rajoute un débit d'hydrogène de 1,2 Nml/min/cm², également envoyé en entrée.

Les électrolyseurs ont été testés à une température de fonctionnement de 800°C. Les deux électrolyseurs présentent une excellente étanchéité et 100 % des gaz envoyés en entrée sont récupérés en sortie.

La figure 11 présente les courbes de polarisation respectivement de l'électrolyseur selon l'état de l'art et selon l'invention, qui sont soumis à un courant croissant. La tension totale de l'empilement est alors mesurée. A partir de ces courbes de polarisation, on peut calculer la résistance électrique équivalente appelée ASR (acronyme anglais de « *Area Spécifique Résistance* »)*.*

Il ressort de cette figure 11 que les ASR sont identiques pour les deux électrolyseurs, avec une valeur de 0,34 Ohm.cm², ce qui montre que dans les deux cas les contacts électriques sont bons. Autrement dit, le joint d'étanchéité 10 selon l'invention ne perturbe pas la qualité des contacts électriques ainsi que les performances de l'électrolyseur.

Un électrolyseur consomme la vapeur d'eau envoyée et la transforme en hydrogène. Lorsqu'une courbe de polarisation est effectuée, le courant augmente continûment ce qui consomme de plus en plus de vapeur d'eau. Le taux d'utilisation de la vapeur d'eau envoyée croit donc au cours de la polarisation. Lorsque la vapeur résiduelle dans les zones actives diminue, alors la tension au sein de l'électrolyseur augmente fortement. Cette forte augmentation de la tension en cours de courbe de polarisation est un marqueur indiquant qu'une majeure partie de la vapeur présente dans les zones actives a été consommée. Cette forte augmentation de tension est appelée « surtension de concentration ». Pour les cellules électrochimiques commerciales de l'état de l'art, si les surtensions de concentration apparaissent pour des valeurs inférieures à 90% du taux d'utilisation de la vapeur d'eau, on peut considérer qu'une partie de la vapeur d'eau n'est pas distribuée dans les zones actives de l'électrolyseur et qu'elle est perdue pour l'application.

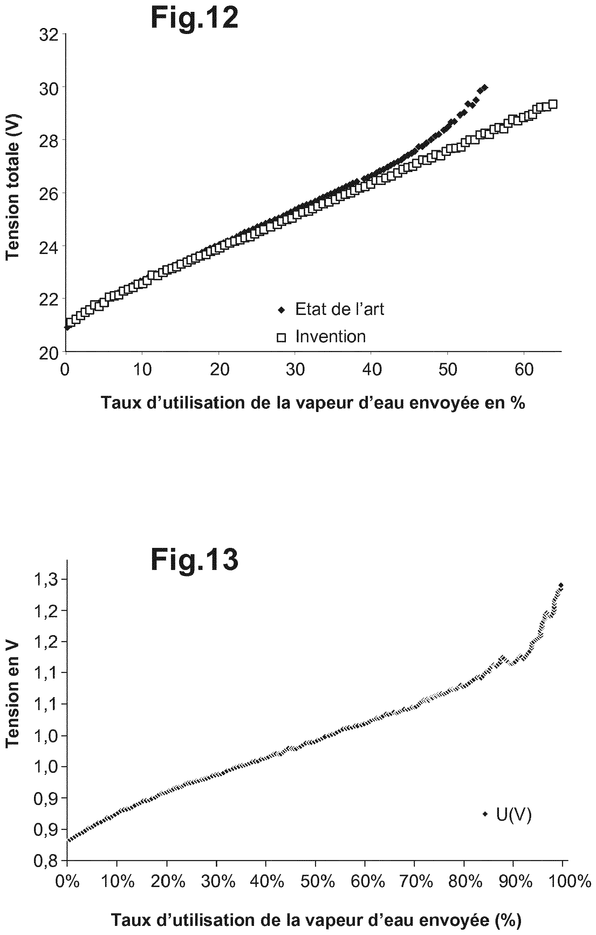

La figure 12 présente le taux d'utilisation de la vapeur d'eau au cours de la courbe de polarisation en fonction de la tension mesurée et cela pour l'électrolyseur selon l'état de l'art et celui selon l'invention considérés dans l'essai précédent.

Il ressort de cette figure 12 que l'électrolyseur selon l'état de l'art présente de bonnes performances jusqu'à 45% de taux d'utilisation. Ensuite des surtensions de concentration sont visibles puisque la tension augmente rapidement.

L'électrolyseur selon l'invention fonctionne quant à lui jusqu'à des taux d'utilisation d'au moins 65% sans apparition de surtension de concentration. Cela tend à prouver que le joint 10 selon l'invention permet d'améliorer sensiblement la distribution des gaz au sein de l'empilement. Sur cet essai les taux d'utilisation supérieur à 65% n'ont pas été testés. Cependant, l'augmentation d'au minimum 20 % du taux d'utilisation maximum est déjà significative d'une nette amélioration des performances.

Un essai supplémentaire a été effectué sur un autre électrolyseur selon l'invention avec un seul motif élémentaire muni donc d'une seule cellule d'électrolyse de 100 cm² de surface active.

Les débits injectés en entrée de cellule sont ici de 10,8 Nml/min/cm² de surface active pour la vapeur d'eau auquel se rajoute un débit de 1,2 Nml/min/cm² d'hydrogène. L'essai est également effectué à une température de 800°C.

On constate que cet électrolyseur à motif unique est parfaitement étanche et 100% des gaz envoyés sont récupérés en sortie.

La figure 13 présente l'évolution de la tension aux bornes de l'électrolyseur lors d'une courbe de polarisation et est tracé en fonction du taux d'utilisation.

Il ressort de cette figure 13 que le taux d'utilisation augmente au cours de l'essai et l'on voit apparaître les surtensions de concentration pour des valeurs de l'ordre de 95 % de taux d'utilisation de la vapeur d'eau. Cela prouve que la totalité de la vapeur d'eau envoyée est utilisée.

A la suite des essais réalisés, on peut donc conclure que le joint d'étanchéité 10 supplémentaire selon l'invention permet de répartir la vapeur d'eau de manière optimale dans les zones actives des cellules et que donc, contrairement aux configurations selon l'état de l'art, aucune quantité de vapeur d'eau n'est envoyée dans des zones non actives de l'électrolyseur, comme les zones Z1 des figures 4A et 4B selon l'état de l'art.

L'invention n'est pas limitée aux exemples qui viennent d'être décrits ; on peut notamment combiner entre elles des caractéristiques des exemples illustrés au sein de variantes non illustrées.

D'autres variantes et améliorations peuvent être envisagées dans le cadre de l'invention.

En particulier, si le matériau inséré dans la grille de nickel 8 est une vitrocéramique dans les exemples détaillés ci-dessus, il peut être tout matériau s'opposant au passage des gaz et pouvant être mis facilement en forme au sein d'un substrat poreux métallique d'un élément de contact. Il peut s'agir notamment d'une brasure fermant la grille sur sa périphérie, avant ou après son mon montage au sein de l'empilement.

En lieu et place d'une grille de nickel, d'autres éléments de contact à substrat poreux et conducteurs électroniques peuvent être utilisés.

## Revendications

1. Dispositif, destiné à former un motif élémentaire d'un réacteur d'électrolyse ou de co-électrolyse, comprenant:
- une cellule (C) d'électrolyse élémentaire à oxydes solides (SOEC) formée d'une cathode (2), d'une anode (4), et d'un électrolyte (3) intercalé entre la cathode et l'anode,
- un premier (5.1) et un deuxième (5.2) interconnecteurs électrique et fluidique, constitués chacun d'un composant en matériau conducteur électronique et étanche aux gaz; les premier et deuxième interconnecteurs étant agencés de part et d'autre de la cellule élémentaire; le premier interconnecteur (5.1) étant percé d'un conduit d'amenée de la vapeur d'eau (52), débouchant à la périphérie d'un côté de la cathode (2) et, d'un conduit de récupération de l'hydrogène produit (54), débouchant à la périphérie de la cellule du côté de la cathode opposé à celui sur lequel débouche le conduit d'amenée, de sorte à réaliser une distribution de la vapeur d'eau amenée et de l'hydrogène produit, dans un compartiment (50); le deuxième interconnecteur (5.2) étant percé d'un conduit de récupération de l'oxygène produit (55), débouchant à la périphérie de la cellule du côté de l'anode (4) de sorte à réaliser une distribution de l'oxygène produit jusqu'au conduit de récupération dans un compartiment (51);
- un premier élément de contact électrique (8), distinct des interconnecteurs, qui est en contact mécanique d'une part avec le premier interconnecteur (5.1) et d'autre part avec la cathode (2); le premier élément de contact électrique (8) étant un substrat poreux ; caractérisé en qu'il comprend :
- un premier joint d'étanchéité (6) agencé à la périphérie de la cellule élémentaire et en appui à la fois contre le premier interconnecteur et contre le deuxième interconnecteur;
- un deuxième joint d'étanchéité (7) agencé à la périphérie de l'anode de la cellule élémentaire et en appui à la fois contre le deuxième interconnecteur (5.2) et contre l'électrolyte ;
- un troisième joint d'étanchéité (10), inséré dans le substrat poreux du premier élément de contact (8), le joint (10) étant en appui contre le premier interconnecteur (5.1) et la cathode (2) en étant agencé à la périphérie des conduits respectivement d'amenée de vapeur d'eau (52) et de récupération de l'hydrogène produit (54), délimitant ainsi le compartiment de distribution de la vapeur d'eau amenée et de l'hydrogène produit.

2. Dispositif selon la revendication 1, le deuxième interconnecteur (5.2) étant percé d'un conduit d'amenée de gaz drainant (53), tel que l'air, sur la cellule du côté de l'anode opposé à celui sur lequel débouche le conduit de récupération de l'O₂ de sorte à réaliser une distribution respectivement du gaz drainant amené et de l'oxygène produit, depuis le conduit d'amenée (53) jusqu'au conduit de récupération (55).

3. Dispositif selon la revendication 1 ou 2, comprenant un deuxième élément (9) de contact électrique, qui est en contact mécanique d'une part avec l'anode (4) et d'autre part avec le deuxième interconnecteur.

4. Dispositif, destiné à former un motif élémentaire d'une pile à combustible, comprenant:
- une cellule (C) électrochimique élémentaire à oxydes solides (SOFC) formée d'une anode (2), d'une cathode (4), et d'un électrolyte (3) intercalé entre la cathode et l'anode,
- un premier (5.1) et un deuxième (5.2) interconnecteurs électrique et fluidique, constitués chacun d'un composant en matériau conducteur électronique et étanche aux gaz; les premier et deuxième interconnecteurs étant agencés de part et d'autre de la cellule élémentaire; le premier interconnecteur (5.1) étant percé d'un conduit d'amenée de combustible (52), débouchant à la périphérie d'un côté de l'anode (2) et, d'un conduit de récupération de l'eau produite (54), débouchant à la périphérie de la cellule du côté de l'anode opposé à celui sur lequel débouche le conduit d'amenée, de sorte à réaliser une distribution respectivement du combustible amené et de l'eau produite, dans un compartiment (50); le deuxième interconnecteur (5.2) étant percé d'un conduit d'amenée d'air ou d'oxygène (53), débouchant à la périphérie de la cellule d'un côté de la cathode (4) et d'un conduit de récupération du surplus d'air ou d'oxygène (55), débouchant à la périphérie de la cellule du côté de la cathode opposé à celui sur lequel débouche le conduit d'amenée de sorte à réaliser une distribution de l'air ou de l'oxygène jusqu'au conduit de récupération dans un compartiment (51);
- un premier (8) élément de contact électrique, distinct des interconnecteurs, qui est en contact mécanique d'une part avec le premier interconnecteur (5.1) et d'autre part avec l'anode (2); le premier élément de contact électrique (8) étant un substrat poreux ;
caractérisé en qu'il comprend :
- un premier joint d'étanchéité (6) agencé à la périphérie de la cellule élémentaire et en appui à la fois contre le premier interconnecteur et contre le deuxième interconnecteur;
- un deuxième joint d'étanchéité (7) agencé à la périphérie de la cathode de la cellule élémentaire et en appui à la fois contre le deuxième interconnecteur (5.2) et contre l'électrolyte ;
- un troisième joint d'étanchéité (10), inséré dans le substrat poreux du premier élément de contact (8), le joint (10) étant en appui contre le premier interconnecteur (5.1) et l'anode (2) en étant agencé à la périphérie des conduits respectivement d'amenée de combustible (52) et de récupération de l'eau produite (54), délimitant ainsi le compartiment (50) de distribution du combustible amené et de l'eau produite.

5. Dispositif selon la revendication 4, comprenant un deuxième élément de contact électrique (9), qui est en contact mécanique d'une part avec la cathode (4) et d'autre part avec le deuxième interconnecteur.

6. Dispositif selon la revendication 1 ou 4, le troisième (10) joint d'étanchéité étant en outre agencé sensiblement à l'aplomb du deuxième joint d'étanchéité, le premier élément de contact étant considéré au-dessus de l'électrolyte.

7. Dispositif selon l'une des revendications précédentes, le troisième joint d'étanchéité (10) à la périphérie des conduits étant un cordon à base de verre et/ou de vitrocéramique inséré dans le substrat poreux du premier élément de contact.

8. Dispositif selon l'une des revendications précédentes, le troisième joint d'étanchéité (10) à la périphérie des conduits étant constitué d'un cordon à base d'une brasure inséré dans le substrat poreux du premier élément de contact.

9. Dispositif selon l'une des revendications précédentes, la hauteur du joint d'étanchéité (10) à la périphérie des conduits, étant la même que celle du substrat poreux du premier élément de contact.

10. Dispositif selon l'une des revendications précédentes, le substrat poreux du premier élément de contact étant une grille métallique, telle qu'une grille de nickel.

11. Dispositif selon l'une des revendications précédentes, le substrat poreux du premier élément de contact électrique (8) ayant une surface identique à celle de l'électrode avec laquelle il est en contact.

12. Réacteur d'électrolyse ou de co-électrolyse EHT, de type SOEC comportant un empilement d'une pluralité de dispositifs selon l'une des revendications 1 à 2 et 6 à 11.

13. Pile à combustible de type SOFC comportant un empilement d'une pluralité de dispositifs selon l'une des revendications 4 à 11.

14. Système comprenant un réacteur d'électrolyse ou de co-électrolyse SOEC selon la revendication 12 pouvant fonctionner de manière réversible en tant que pile à combustible SOFC selon la revendication 13 et vice-et-versa.

## Patentansprüche

1. Vorrichtung, die zum Bilden einer Grundeinheit eines Elektrolyse- oder Co-Elektrolyse-Reaktors vorgesehen ist, umfassend:
- eine Einzelzelle (C) für die Festoxidelektrolyse (SOEC), die aus einer Kathode (2), einer Anode (4) und einem zwischen der Kathode und der Anode angeordneten Elektrolyten (3) gebildet ist,
- einen ersten (5.1) und einen zweiten (5.2) Verbinder für Strom und Fluid, die jeweils aus einem Bestandteil aus einem elektronenleitenden und gasdichten Werkstoff bestehen; wobei der erste und der zweite Verbinder auf beiden Seiten der Einzelzelle angeordnet sind; wobei durch den ersten Verbinder (5.1) eine Wasserdampfzuleitung (52), die am Rand von einer Seite der Kathode (2) einmündet, und eine Leitung zur Sammlung des erzeugten Wasserstoffs (54) gebohrt ist, die am Rand der Zelle auf der Seite der Kathode gegenüber der Seite einmündet, auf der die Zuleitung einmündet, damit eine Verteilung des zugeführten Wasserdampfs und des erzeugten Wasserstoffs in einer Kammer (50) erfolgt; wobei durch den zweiten Verbinder (5.2) eine Leitung zur Sammlung des erzeugten Sauerstoffs (55) gebohrt ist, die am Rand der Zelle auf der Seite der Anode (4) einmündet, damit eine Verteilung des erzeugten Sauerstoffs bis zur Sammelleitung in einer Kammer (51) erfolgt;
- ein erstes elektrisches Kontaktelement (8), separat von den Verbindern, das einerseits den ersten Verbinder (5.1) und andererseits die Kathode (2) mechanisch berührt; wobei das erste elektrische Kontaktelement (8) ein poröses Substrat ist;
**dadurch gekennzeichnet, dass** sie Folgendes umfasst:
- eine erste Dichtung (6), die am Rand der Einzelzelle angeordnet ist und gleichzeitig an dem ersten Verbinder und an dem zweiten Verbinder anliegt;
- eine zweite Dichtung (7), die am Rand der Anode der Einzelzelle angeordnet ist und gleichzeitig an dem zweiten Verbinder (5.2) und an dem Elektrolyten anliegt;
- eine dritte Dichtung (10), die in das poröse Substrat des ersten Kontaktelements (8) eingesetzt ist, wobei die Dichtung (10) an dem ersten Verbinder (5.1) und der Kathode (2) anliegt und dabei am Rand der Wasserdampfzuleitung (52) beziehungsweise der Leitung zur Sammlung des erzeugten Wasserstoffs (54) angeordnet ist und so die Kammer zur Verteilung des zugeführten Wasserdampfs und des erzeugten Wasserstoffs begrenzt.

2. Vorrichtung nach Anspruch 1, wobei durch den zweiten Verbinder (5.2) eine Zuleitung für Ableitgas (53) wie Luft an der Zelle auf der Seite der Anode gegenüber der Seite, auf der die Leitung zur Sammlung von O₂ einmündet, gebohrt ist, damit eine Verteilung des zugeführten Ableitgases beziehungsweise des erzeugten Sauerstoffs aus der Zuleitung (53) bis zur Sammelleitung (55) erfolgt.

3. Vorrichtung nach Anspruch 1 oder 2, die ein zweites elektrisches Kontaktelement (9) umfasst, das einerseits die Anode (4) und andererseits den zweiten Verbinder mechanisch berührt.

4. Vorrichtung, die zum Bilden einer Grundeinheit einer Brennstoffzelle vorgesehen ist, umfassend:
- eine elektrochemische Einzelzelle (C) mit Festoxiden (SOFC), die aus einer Anode (2), einer Kathode (4) und einem zwischen der Kathode und der Anode angeordneten Elektrolyten (3) gebildet ist,
- einen ersten (5.1) und einen zweiten (5.2) Verbinder für Strom und Fluid, die jeweils aus einem Bestandteil aus einem elektronenleitenden und gasdichten Werkstoff bestehen; wobei der erste und der zweite Verbinder auf beiden Seiten der Einzelzelle angeordnet sind; wobei durch den ersten Verbinder (5.1) eine Brennstoffzuleitung (52), die am Rand von einer Seite der Anode (2) einmündet, und eine Leitung zur Sammlung des erzeugten Wassers (54) gebohrt ist, die am Rand der Zelle auf der Seite der Anode gegenüber der Seite einmündet, auf der die Zuleitung einmündet, damit eine Verteilung des zugeführten Brennstoffs beziehungsweise des erzeugten Wassers in einer Kammer (50) erfolgt; wobei durch den zweiten Verbinder (5.2) eine Luft- oder Sauerstoffzuleitung (53), die am Rand der Zelle auf einer Seite der Kathode (4) einmündet, und eine Leitung zur Sammlung von überschüssiger Luft oder überschüssigem Sauerstoff (55) gebohrt ist, die am Rand der Zelle auf der Seite der Kathode gegenüber der Seite einmündet, auf der die Zuleitung einmündet, damit eine Verteilung der Luft oder des Sauerstoffs bis zur Sammelleitung in einer Kammer (51) erfolgt;
- ein erstes elektrisches Kontaktelement (8), separat von den Verbindern, das einerseits den ersten Verbinder (5.1) und andererseits die Anode (2) mechanisch berührt; wobei das erste elektrische Kontaktelement (8) ein poröses Substrat ist;
**dadurch gekennzeichnet, dass** sie Folgendes umfasst:
- eine erste Dichtung (6), die am Rand der Einzelzelle angeordnet ist und gleichzeitig an dem ersten Verbinder und an dem zweiten Verbinder anliegt;
- eine zweite Dichtung (7), die am Rand der Kathode der Einzelzelle angeordnet ist und gleichzeitig an dem zweiten Verbinder (5.2) und an dem Elektrolyten anliegt;
- eine dritte Dichtung (10), die in das poröse Substrat des ersten Kontaktelements (8) eingesetzt ist, wobei die Dichtung (10) an dem ersten Verbinder (5.1) und der Anode (2) anliegt und dabei am Rand der Brennstoffzuleitung (52) beziehungsweise der Leitung zur Sammlung des erzeugten Wassers (54) angeordnet ist und so die Kammer (50) zur Verteilung des zugeführten Brennstoffs und des erzeugten Wassers begrenzt.

5. Vorrichtung nach Anspruch 4, die ein zweites elektrisches Kontaktelement (9) umfasst, das einerseits die Kathode (4) und andererseits den zweiten Verbinder mechanisch berührt.

6. Vorrichtung nach Anspruch 1 oder 4, wobei die dritte Dichtung (10) ferner im Wesentlichen in einer senkrechten Linie mit der zweiten Dichtung angeordnet ist, wobei das erste Kontaktelement als über dem Elektrolyten befindlich angesehen wird.

7. Vorrichtung nach einem der vorhergehenden Ansprüche, wobei die dritte Dichtung (10) am Rand der Leitungen ein Glasring und/oder Glaskeramikring ist, der in das poröse Substrat des ersten Kontaktelements eingesetzt ist.

8. Vorrichtung nach einem der vorhergehenden Ansprüche, wobei die dritte Dichtung (10) am Rand der Leitungen aus einem Hartlotring besteht, der in das poröse Substrat des ersten Kontaktelements eingesetzt ist.

9. Vorrichtung nach einem der vorhergehenden Ansprüche, wobei die Höhe der Dichtung (10) am Rand der Leitungen dieselbe ist wie die des porösen Substrats des ersten Kontaktelements.

10. Vorrichtung nach einem der vorhergehenden Ansprüche, wobei das poröse Substrat des ersten Kontaktelements ein Metallgitter, beispielsweise ein Nickelgitter ist.

11. Vorrichtung nach einem der vorhergehenden Ansprüche, wobei die Fläche des porösen Substrats des ersten elektrischen Kontaktelements (8) identisch ist mit der Fläche der Elektrode, die es berührt.

12. SOEC-HTE-Elektrolyse- oder -Co-Elektrolysereaktor, der einen Stapel aus einer Vielzahl von Vorrichtungen nach einem der Ansprüche 1 bis 2 und 6 bis 11 aufweist.

13. SOFC-Brennstoffzelle, die einen Stapel aus einer Vielzahl von Vorrichtungen nach einem der Ansprüche 4 bis 11 aufweist.

14. System, das einen SOEC-Elektrolyse- oder -Co-Elektrolysereaktor nach Anspruch 12 umfasst, der reversibel als SOFC-Brennstoffzelle nach Anspruch 13 und umgekehrt arbeiten kann.

## Claims

1. Device, intended to form an individual unit of an electrolysis or co-electrolysis reactor, comprising:
- an individual solid oxide (SOEC) electrolysis cell (C) formed of a cathode (2), of an anode (4) and of an electrolyte (3) inserted between the cathode and the anode,
- a first (5.1) and a second (5.2) electrical and fluid interconnector, each consisting of a component made of electron-conducting and gastight material; the first and second interconnectors being arranged on either side of the individual cell; the first interconnector (5.1) being pierced with a conduit for supplying steam (52), which opens at the periphery of one side of the cathode (2), and with a conduit for recovering the hydrogen produced (54), which opens at the periphery of the cell on the side of the cathode opposite the side on which the supply conduit opens, so as to distribute the steam supplied and the hydrogen produced, in a compartment (50); the second interconnector (5.2) being pierced with a conduit for recovering the oxygen produced (55), which opens at the periphery of the cell on the side of the anode (4) so as to distribute the oxygen produced to the recovery conduit in a compartment (51);
- a first electrical contact element (8), different from the interconnectors, which is in mechanical contact on the one hand with the first interconnector (5.1) and on the other hand with the cathode (2); the first electrical contact element (8) being a porous substrate; **characterized in that** it comprises:
- a first seal (6) arranged at the periphery of the individual cell and bearing both against the first interconnector and against the second interconnector;
- a second seal (7) arranged at the periphery of the anode of the individual cell and bearing both against the second interconnector (5.2) and against the electrolyte;
- a third seal (10), inserted in the porous substrate of the first contact element (8), the seal (10) bearing against the first interconnector (5.1) and the cathode (2) by being arranged at the periphery of the conduits for supplying steam (52) and for recovering the hydrogen produced (54), respectively, thus delimiting the compartment for distributing the steam supplied and the hydrogen produced.

2. Device according to Claim 1, the second interconnector (5.2) being pierced with a conduit for supplying draining gas (53), such as air, on the cell on the side of the anode opposite the side on which the conduit for recovering O₂ opens, so as to distribute respectively the draining gas supplied and the oxygen produced, from the supply conduit (53) to the recovery conduit (55).

3. Device according to Claim 1 or 2, comprising a second electrical contact element (9), which is in mechanical contact on the one hand with the anode (4) and on the other hand with the second interconnector.

4. Device, intended to form an individual unit of a fuel cell, comprising:
- an individual solid oxide (SOFC) electrochemical cell (C) formed of an anode (2), of a cathode (4) and of an electrolyte (3) inserted between the cathode and the anode,
- a first (5.1) and a second (5.2) electrical and fluid interconnector, each consisting of a component made of electron-conducting and gastight material; the first and second interconnectors being arranged on either side of the individual cell; the first interconnector (5.1) being pierced with a conduit for supplying fuel (52), which opens at the periphery of one side of the anode (2), and with a conduit for recovering the water produced (54), which opens at the periphery of the cell on the side of the anode opposite the side on which the supply conduit opens, so as to distribute the fuel supplied and the water produced, respectively, in a compartment (50); the second interconnector (5.2) being pierced with a conduit for supplying air or oxygen (53), which opens at the periphery of the cell on one side of the cathode (4) and with a conduit for recovering the surplus air or oxygen (55), which opens at the periphery of the cell on the side of the cathode opposite the side on which the supply conduit opens, so as to distribute the air or oxygen to the recovery conduit in a compartment (51);
- a first electrical contact element (8), different from the interconnectors, which is in mechanical contact on the one hand with the first interconnector (5.1) and on the other hand with the anode (2); the first electrical contact element (8) being a porous substrate; **characterized in that** it comprises:
- a first seal (6) arranged at the periphery of the individual cell and bearing both against the first interconnector and against the second interconnector;
- a second seal (7) arranged at the periphery of the cathode of the individual cell and bearing both against the second interconnector (5.2) and against the electrolyte;
- a third seal (10), inserted into the porous substrate of the first contact element (8), the seal (10) bearing against the first interconnector (5.1) and the anode (2) by being arranged at the periphery of the conduits for supplying fuel (52) and for recovering the water produced (54), respectively, thus delimiting the compartment (50) for distributing the fuel supplied and the water produced.

5. Device according to Claim 4, comprising a second electrical contact element (9), which is in mechanical contact on the one hand with the cathode (4) and on the other hand with the second interconnector.

6. Device according to Claim 1 or 4, the third seal (10) additionally being arranged substantially in a vertical line with the second seal, the first contact element being considered to be above the electrolyte.

7. Device according to one of the preceding claims, the third seal (10) at the periphery of the conduits being a bead based on glass and/or on glass-ceramic inserted into the porous substrate of the first contact element.

8. Device according to one of the preceding claims, the third seal (10) at the periphery of the conduits consisting of a bead based on a solder inserted into the porous substrate of the first contact element.

9. Device according to one of the preceding claims, the height of the seal (10) at the periphery of the conduits being the same as that of the porous substrate of the first contact element.

10. Device according to one of the preceding claims, the porous substrate of the first contact element being a metal screen, such as a nickel screen.

11. Device according to one of the preceding claims, the porous substrate of the first electrical contact element (8) having a surface area identical to that of the electrode with which it is in contact.

12. HTE electrolysis or co-electrolysis reactor, of SOEC type comprising a stack of a plurality of devices according to one of Claims 1 to 2 and 6 to 11.

13. Fuel cell of SOFC type comprising a stack of a plurality of devices according to one of Claims 4 to 11.

14. System comprising an SOEC electrolysis or co-electrolysis reactor according to Claim 12 that is able to operate reversibly as an SOFC fuel cell according to Claim 13 and vice versa.
